# EUROPEAN PATENT APPLICATION

(11) **EP 1 748 547 A1**
(43) Date of publication of application: **31.01.2007**
(21) Application number: 05425552.6
(22) Date of filing: 27.07.2005
(51) Int. Cl.: H02P 7/00

(54) **Apparatus and process for controlling and regulating electric motor actuated devices**

(71) Applicant: Rhea Vendors S.p.A., 22100 Como (IT)
(72) Inventor: Doglioni Majer, Luca, 22010 Carate Urio (Como) (IT)
(74) Representative: Gislon, Gabriele

(57) **Abstract**

Controlling and adjusting a device operated by an electric motor are carried out by shutting down the electric power supply of said electric motor at a plurality of time intervals during the motor operation; by measuring in the time interval the voltage supplied by the electric motor due to the rotation of the electric motor rotor being drawn by the device coupled to the same; by comparing the value of the sensed voltage with a reference value; and on the basis of said comparison by varying at least a parameter related to the functioning of the device in order to compensate eventual deviations.

## Description

The present invention concerns an apparatus and a method for controlling and regulating devices operated by electric motors, in particular for controlling and regulating pumps, impellers, screw conveyors, fans, rotors or similar devices operated by electric motors.

Generally electric motors are operated for transforming electric energy into mechanical energy and vice versa. Usually electric motors are provided with a rotor, typically jointed to the drive shaft. By applying an electric voltage to the motor, for instance to the statoric windings, a rotary motion is transmitted to the rotor.

It is known to utilize electric motors for transferring motion to impellers, pumps, rotors, screw conveyors, blades or equivalent devices. Electric motors are often utilized for operating the pumps which supply a fluid to a hydraulic or pneumatic circuit. Moreover electric motors are provided for rotating the impellers of pumps or fans, rotative heat exchanger, mixers, etc.. Thus, in general, matching electric motors with machines rotating parts is common in the civil/domestic field.

Rotating parts operated by an electric motor are coupled, directly or indirectly by way of gears, with the shaft of the rotor of the same motor. Rotation of the electric motor shaft is thus transmitted to the rotating part of the device which is coupled with it.

Several applications provide controlling and adjusting the devices coupled with electric motors by way of monitoring the number of revolutions. In other words, it is often necessary to know the speed of rotation of the element operated by the electric motor. Monitoring of the rotation speed allows for setting a proper adjustment of the operated device or allows for controlling its regular functioning. The reasons which lead to undesired variations in the rotation speed of the operated device may be different. For instance the rotation speed of the rotor of a hydraulic pump, initially set to a reference value, may change due to a variation in the resistance of the related hydraulic circuit (consider, for instance, when a valve along the circuit is not properly regulated) or due to the build up of debris at the rotor bearings.

Usually monitoring of the rotation speed of the motor operated device is carried out by appliances which are difficult to assemble on the rotating parts, complicated to calibrate and sometimes delicate.

Traditional control and adjusting systems make use of speedometers (mechanical, electronic, optical, etc.), encoders, stroboscopes, etc. for sensing the angular velocity of the devices operated by the related electric motor. This type of instruments provides an output signal proportional to the measured value of the angular speed of the shaft to which they are applied.

Traditional control and adjusting systems require the proper setup of the device matched with the electric motor, in order to lodge on the same device the instruments usually utilized for sensing its angular velocity. In other words the known instruments are cumbersome and, thus, it is necessary to provide opportune room for their assembling on a shaft or on a rotating element as its rotation speed is desired to be monitored. Moreover the known instruments must be calibrated and their proper functioning hast to be periodically verified.

Instead in some applications it is indispensable to minimize the encumbrance of the measuring systems. For instance in the machines intended to prepare and supply beverages the pumps operated for circulating water or other alimentary fluids, as syrups, must have low costs and dimensions. In these machines the water supply to the distribution circuit is usually carried out by a pump which comprises an impeller immersed in a reservoir containing water. When, as it is very usual for this type of pumps, the rotation speed of the impeller decreases due to a build up of impurities within the respective bearings, the amount of circulated fluid, i.e. the water supplied to the infusion chamber, is lower than the optimal value for a given dispensing time, the consequence being the uncalibration of the process and the negative changes in the organoleptic characteristics of the beverage.

Therefore it is necessary to provide a system for controlling and adjusting the impeller operation in the aforesaid case and, generally, for controlling and adjusting the operation of the device operated by the motor in order to compensate for the undesired variations in the angular velocity of the driving shaft and ensure the optimal functioning of the same operated device.

It is the object of the present invention to provide a method and an apparatus for controlling and adjusting devices operated by electric motors which obviate the drawbacks of the known systems in a simple and effective way, the apparatus providing minimum size without the need for complicated wirings. In particular the method and the apparatus according to the present invention are for permitting the effective control and adjustment of pumps, impellers, screw conveyors, fans, rotors or similar devices operated by way of electric motors, in particular within machines intended to prepare and/or distribute food and beverages.

It is another object of the present invention to provide a method and an apparatus for controlling and adjusting rotating devices operated by electric motors which allow for sensing of the angular velocity of the device rotated by the motor and which permit the feedback control of the same motor on the base of the value of the sensed velocity.

It is also an object of the present invention to provide a method and an apparatus for effectively, simply and cheaply controlling and adjusting machines for dispensing beverages or food (also ready-made food), which machines are provided with devices operated by electric motors.

These and other objects are achieved by the present invention which concerns a method according to claim 1.

During the step of shutting down the power supply, the motor runs as a voltage generator. The voltage supplied by the motor is indicative of the number of revolutions (per minute) of the rotor. In other words, by measuring the voltage generated by the electric motor, the rotor speed of rotation is detected and, thus, the angular velocity of the motor shaft is detected which is usually an integral part of the rotor. Measuring of the angular velocity is implemented for adjusting at least one operating parameter of the motor and/or of the installation (or machine) wherein the motor operates. Moreover, by measuring the speed of rotation at discrete time intervals, which may be regular or irregular, it is possible to implement a diagnostic control over the operation of the motor and the respective installation. The skilled person will understand that controlling and adjusting the electric motor and the related installation (or machine) may be achieved real-time during the operation, i.e. it is possible to carry out the method according to the present invention at preset time intervals (for instance when the machine is switched on and once or more times per day) or continuously during the operation of the machine (i.e. the method is carried out during the whole operating time of the machine).

The method according to the present invention provides that the motor rotating the device to which is matched, for instance an impeller, is shut down for a time interval, which can be defined as "blackout time", i.e. the motor is not supplied with the power necessary for its operation as motor. During the blackout time the motor operates as a voltage generator. As a matter of fact, even if the motor is not powered, its rotor keeps rotating together with the device to which is coupled, for instance due to the inertia or due to the force of a fluid acting on the device. The rotation of the motor driving shaft and the eventual device coupled to the same which verifies during the step of shutting down the power of the motor may be defined as "residual rotation". The residual rotation may be caused by the rotor inertia and/or the inertia of the load, or by a fluid impinging on the load, etc.. Duration of the residual rotation of the motor driving shaft depends, in general, by the weight of the rotor, the weight of the eventual load to which it is coupled and by the resistance applied to the same shaft. The electric voltage supplied by the motor is a measure of the rotation speed of the motor driving shaft and, then, it is indicative of the angular velocity of the device coupled to the motor.

The measure of the rotor speed of rotation provides useful information to verify the proper functioning of the motor and, in general, of the apparatuses provided with motors for operating pumps, screw conveyors, impellers, etc.. For example it is possible to verify if the resistance to rotation of the shaft bearings is within the correct design parameters. In other words the method according to the present invention allows for the implementing of a diagnostic control over the functioning of the electric motor and the device to which it is coupled and, in general, over the functioning of the installations or machines provided with electric motors.

The method according to the present invention provides the step of adjusting the operation of installations, machines, dispensers, etc., provided with electric motors for actuating such devices. Adjustment is carried out on the basis of the sensed values of the angular velocity of eventual devices coupled to electric motors. For example the method according to the invention may be carried out for the adjustment of an electric motor coupled to an impeller which supplies water into machines for the preparation and dispensing of beverages such as coffee, capuccino, tee, etc.. When the measure of the voltage generated by the electric motor during the motor blackout time has been carried out, the method provides the step of adjusting the motor (or the motors) of the dispensing machine on the basis of the corresponding value of the angular velocity. For instance, the motor speed (rpm) or the operating time may be changed. In other words the method provides a feedback adjustment (in real-time) of the electric motor carried out on the basis of the sensed value of the voltage generated during the shutdown of the motor power supply and, then, on the basis of the value of the speed of rotation. Alternatively, or together with the feedback control over the motor, it is provided a feedback control over the power generator which supplies the motor, i.e. it is possible to modify the supply voltage of the same motor. In this way it is possible to control and adjust, for instance, the machine for preparing and dispensing beverages, in such a way that possible variations of the operating parameters with respect to preset values are compensated.

Among the parameters which can be adjusted there are, for instance, the motor rpm, the torque, the power, the operating time, the stop time, etc.. Adjusting of the motor may be achieved also indirectly, for example by acting on the valves of the hydraulic circuit wherein a pump operates which is actuated by the electric motor in such a way that the fluid flow rate within the circuit is set consequently.

In the following description reference will be made to the non-limiting example of an impeller for the circulation of water within machines for the preparation of coffee (dispensing machines). The impeller is subject to wearing, build up of limestone sediments and debris at the respective bearings, and other drawbacks which cause increasing in the resistance against rotation. The method according to the present invention allows for adjusting the speed of rotation of the impeller in such a way to compensate the negative effects that the aforesaid drawbacks provide, in this way ensuring the supplying of the proper water rate. Thus, in general, the method according to the invention permits to control and adjust the machine provided with the impeller, for instance by keeping constant the dispensing time through increasing the rpm or, vice versa, by increasing the operating time in order to compensate for the lower rpm. In this way the water rate which the impeller supplies for the preparation of a coffee dose remains optimal in time.

It will be clear for the skilled person that shorter the time interval is for implementing the method (during the motor residual rotation) and for the measuring of the generated voltage, more precise is the computation of the angular velocity of the rotor and/or the device actuated by the electric motor with respect to the velocity corresponding to the powered motor. Referring to the case of the motor being coupled to a hydraulic impeller, when the motor is disconnected from the respective power supply the impeller continues rotating due to its inertia, but slows down due to the drag generated by the liquid wherein it is immersed. The voltage supplied by the electric motor is indicative of the angular velocity of the impeller during the ordinary operation of the motor only if it is measured within a time interval which is negligible with respect to the slow down time interval of the same impeller. For instance, for many applications a proper time interval for the shutdown of the electric motor from its power supply and for the measuring of the generated voltage is equal to about 1 millisecond. In other words the duration of the proper time interval for implementing the method must be minimized in order to minimize the offset between the angular velocity valued by actuating the method and the angular velocity corresponding to the motor regularly powered.

Preferably valuing of the speed of rotation starting from the sensed value of the voltage is made on the basis of the characteristic curve voltage/motor rpm in a specific working condition. According to such characteristic (curve) it is then possible to combine a value of the voltage with a precise value of the speed of rotation and vice versa. For each type of motor and for each specific application, the characteristic curve is defined by way of laboratory tests providing a series of values which describe the characteristic curve, i.e. the curve which contains the "reference value" cited in claim 1.

Such tests may be carried out, for instance, with the unpowered motor drawn into rotation by an impeller at different set rotation speeds. The characteristic curve obtained in this way may be defined as for the "unpowered motor". With this measuring system a direct correspondence is obtained between the measured value of the voltage and the rotation speed of the impeller (which is known because is preset). These tests practically define the characteristic curve of the motor during its functioning as generator.

The characteristic of the unpowered motor may also be obtained by actuating the device at different operating conditions with the impeller immersed in water and by measuring the voltage generated when the motor is shutdown, i.e. by acting according to the method on an apparatus in optimal conditions (i.e. standard conditions) when the speed of rotation (rpm) is known, for instance when it is measured. By repeating the measuring of the voltage after the shutdown, under the same other conditions but at several motor rpm, the desired characteristic curve is obtained.

Alternatively, the voltage/rpm characteristic curve of the motor may be detected when the motor is powered and rotates an impeller immersed in water (or another liquid, in the desired final operating conditions): the characteristic is detected by powering the motor with different voltages and by measuring the velocity corresponding to each voltage supplied to the motor. The characteristic curve detected in thus way may be defined as for the "powered motor". Such characteristic (curve) has to be corrected to take into account the impeller deceleration which reveals during the motor shutdown and the corresponding decreasing in the voltage value. In this case the method provides that a "corrected" characteristic is chosen, i.e. a characteristic which takes into account the voltage decrease caused by the motor shutdown. The corrected characteristic may be defined starting from the powered motor characteristic and making use of proper conversion factors or laboratory tests.

Processing of the voltage signal on the basis of the "unpowered motor" characteristic or the "corrected" characteristic comprises the step of comparing the sensed value of the speed of rotation with a reference value. The difference between such values is taken onto account for adjusting the electric motor when its powering is reestablished.

The skilled technician will understand that the measuring of the voltage supplied by the motor may be performed once or may be performed by detecting several values of the voltage and computing an average of such values.

The method shows off a plurality of advantages. For instance it permits to valuate the speed of rotation of an electric motor shaft rapidly and in a simple way, independently upon the motor type, and permits to adjust or compensate possible offsets from the preset values continuously, i.e. during the whole operating time of the machine, by intervening on the same speed or other machine operating parameters in order to achieve the desired performance. In fact the method is suitable to all the electric motors which may operate also as voltage generators. Moreover the method is achievable with minimum costs since an apparatus which performs its steps may be assembled with cheap devices, with no need for expensive instrumentation to be coupled to the shaft as instead provided by the traditional systems.

Advantageously the method according to the present invention permits to control the proper functioning of rotating elements coupled to an electric motor and to adjust them in a simple and effective way, with no need for expensive and cumbersome devices as tachometers, encoders, stroboscopes, etc. and complicated electronic circuits.

Another advantage of the method according to the present invention with respect to the prior art is that the valuation of the angular velocity of the device coupled to the electric motor is achieved with no need for providing outer elements on the device rotor. This allows for minimizing the size of the device rotor.

An extremely relevant advantage of the method according to the present invention is that the angular velocity of the device operated by an electric motor may be valued remotely, with no need for interfacing external instrumentation to the same device, and eventually may be valued from a distant position. This may be particularly useful when the operated device runs in an aggressive environment. Remotely controlling and adjusting the device are achievable in a simple and effective way.

The present invention also concerns an apparatus according to claim 9.

Preferably the apparatus according to the present invention is operated for controlling and adjusting devices matched to electric motors, for instance pumps, impellers, screw conveyors, rotors, blades or the like, pistons, leverages for coffee machines and, more generally, for controlling and adjusting installations, machines and equipments provided with such motors and devices. The apparatus comprises means for temporarily cut the power supply to the motor and a voltage measurement device for sensing the voltage provided by the motor, when unpowered and rotated by the device to which it is coupled.

The means for temporarily shutting down the power of the electric motor may comprise, for example, a transistor. The transistor may be suitably adjusted by way of a timer.

According to an embodiment of the apparatus the voltage measurement device comprises a voltmeter. Alternatively the voltage measurement device is an electronic circuit. The voltage signal detected by the voltage measurement device, for instance the voltmeter, may be processed directly or, preferably, upon being conversed into a digital signal. This may be carried out by providing the apparatus with an analog/digital A/D converter.

Preferably the apparatus according to the invention comprises a control unit having the function of managing the means for shutting down the power and the voltage measurement device. Moreover the control unit carries out the processing of the voltage signal provided by the related measurement device. For instance the control unit compares the measured voltage value, corresponding to a specific angular velocity, with a reference value and on the basis of the difference between such values adjusts the electric motor, i.e. it adjusts the electric motor rpm, or the supplied mechanical power, the torque, the motor operating time or non-operating time, etc..

Advantageously, the apparatus according to the present invention permits not only to control, simply and effectively, the performance of the motor and the device coupled to the same, but also permits to adjust the same motor in such a way to compensate an eventual increasing of the resistance against rotation which the device may experience due to the wear, or due to the build up of debris, limestone, etc., within the related bearings. In view of these grounds, the apparatus may be advantageously utilized for controlling and adjusting machines provided with devices operated by electric motors, for example machines for dispensing beverages (provided with impellers for water, screw conveyors for ice, pumps for cooling circuits, etc.), household appliances, etc..

Preferably, when the device is operating, the time interval corresponding to the motor not powered is minimized, i.e. it is preferable to set to the minimum the shutdown time interval of the motor from the related power. In this case the shutdown time interval and the measurement time interval coincide, even if in general the measurement time interval may have a shorter duration than the shutdown time interval. For many applications a valid time interval is comprised between 0.01 and 100 milliseconds, preferably the time interval is comprised between 0.1 and 50 milliseconds and more preferably between 0.1 and 20 milliseconds. For instance, for the machines for dispensing beverages a suitable value for such time interval is about 1 millisecond.

Alternatively, the voltage measurement may be carried out at the end of the operating time of the device, paying attention to carry out such measurement in a short time, which preferably has a duration as indicated above for the shutdown time interval.

The method and the apparatus according to the present invention may be utilized in many technical fields. In general the method and the apparatus according to the present invention may be applied in all cases wherein the electric motors and the devices to which they are matched are not subject to frequent maintenance cycle. The method and the apparatus are particularly useful when applied in the field of the machines for dispensing beverages and in particular for actuating the pumps intended to circulate water or the fluid used for preparing the beverages. The method and the apparatus may be utilized also in association with the electric motors of household appliances, snack dispensers, or in general, in association with the motors utilized in (ready-made or not) food distributors, screw conveyors for ice, etc..

In general the method and the apparatus according to the present invention allow for implementing a feedback control over the electric motor and over the machine or installation provided with such motor. In other words they allow for adjusting the output supplied by the motor during its normal operation on the basis of the acquired information related to the speed of rotation of the rotor/shaft, so as to compensate eventual changes in the inertia of the load or of the same rotor. Control and adjustment can be carried out in real-time during functioning of the machine or installation.

The method and the apparatus according to the present invention also permit to implement a self-diagnosis feature, i.e. they permit to check if the electric motor is connected or not to the related load, or if the motor is out of order. When there is no load provided, under the same other conditions, the speed of rotation of the motor is higher than the speed corresponding to a load being operated, for instance the speed may remain almost constant for a long time lapse after shutting down. In this case the sensed voltage does not decrease to the initial value, but remains practically unchanged since the motor shaft is not decelerated by the load. The method and the apparatus also permit to check if the motor or the related load are blocked, for instance due to seizing or jamming, or due to a motor failure. In this case the detected voltage is steady in time, i.e. it does not decrease from an initial value, for instance the voltage may be constantly zero. An alarm signal is always generated when, due to the aforesaid reasons, the functioning of the motor and/or the load does not match with the proper parameters.

Electric motors are also utilized for transmitting translational or rotational-translational motion, etc.. For sake of clarity, henceforward reference will be made to the case wherein the motion transmitted by the motor to the coupled device is rotational. The skilled technician will understand that the present invention can be implemented independently upon the motion type transmitted by an electric motor to the device coupled to the same.

Further aspects and advantages of the present invention will be more evident from the following description, provided as an explanatory non-limiting example with reference to the schematic enclosed drawings, wherein:
- figure 1 is a scheme of a pumping circuit for beverage dispensing machines;
- figure 2 is a scheme of a first embodiment of the apparatus according to the present invention;
- figure 3 is a scheme of a second embodiment of the apparatus according to the present invention;
- figure 4 is a flow chart of the method according to the present invention;
- figure 5 is a scheme of a third embodiment of the apparatus according to the present invention;
- figure 6 is a scheme of a fourth embodiment of the apparatus according to the present invention.

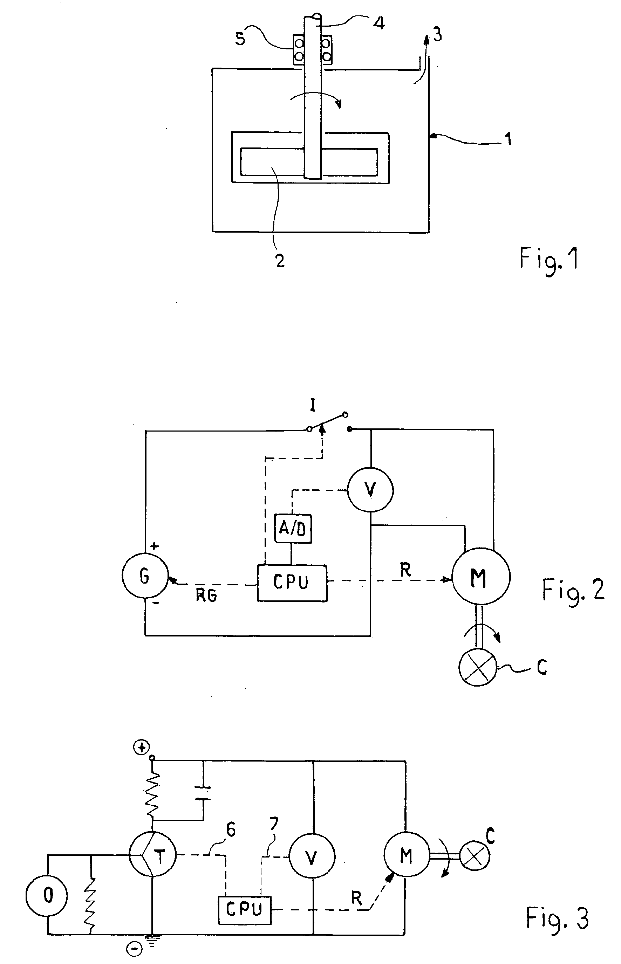

Figure 1 schematically shows a water pumping unit of the type utilized in the machines for dispensing coffee. An impeller 2 is lodged within a container 1 filled with water for supplying the water through the outlet 3 of the container 1. The impeller 2, for instance of the type having fixed radial blades, comprises a shaft 4 supported by bearings 5. The shaft 4 is rotated by an electric motor (not shown) of a known type. Accumulating of limestone in correspondence of the bearings 5, the blades of the impeller 2 or in correspondence of the outlet 3 causes an increasing of the resistance exerted by the impeller 2, i.e. the load which the electric motor has to move increases. Often this causes the impeller number of revolutions to decrease and thus causes the provided head to diminish, with evident drawbacks related to the functioning of the dispensing machine. This provides the need for monitoring the speed of rotation of the impeller 2.

Usually the speed of rotation of the impellers, also in other applications, is measured by way of expensive, delicate, or cumbersome sensors and/or electronic/optical equipments.

Figure 2 shows a possible embodiment of the apparatus according to the present invention. Figure 2 shows the electric scheme of a possible drive system for a motor M which rotates a load C, for instance through a rotating shaft directly coupled to the shaft of the motor M. The motor is powered by a generator G. Advantageously the apparatus comprises means I having the function of cutting off the power of the motor M for a preset time interval.

In the embodiment shown in the figure 2 the means for blocking the power of the motor M are schematically shown as a switch I (in figure 2 it is open). When the means I cut off the power, the shaft of the motor M continues to rotate being drawn by the load C. The load C may be the impeller shown in figure 1, or a pump for alimentary fluids, a screw conveyor for ice, etc.. The load C continues to rotate due to the inertia, for instance if the load C is the impeller 2, this may continue to rotate for a certain time before the resistance exerted by the water makes it to stop. In general one can suppose that in the first time instants following the shutting down of the generator G the shaft of the motor M rotates at the same speed corresponding to the functioning of the motor M being powered. As time passes by the load C, due to resistances, frictions, etc., will cause the motor M shaft to slow down.

During the time lapse through which the motor is not powered the same motor M runs as a voltage generator. In fact the motor shaft is drawn in rotation by the load C and supplies a voltage at the motor statoric windings, which voltage is proportional to the speed of rotation.

The apparatus comprises a voltage V measurer, for instance an electronic circuit dedicated to this task, having the function of sensing the voltage generated by the motor M during the shutdown.

Having in mind to minimize the motor M shutdown time and to measure the voltage, the detected voltage provides an indication of the speed of rotation of the driving shaft and, thus, provides an indication of the speed of rotation of the load C, for instance the impeller 2 of figure 1, during the functioning of the device. On the basis of this measurement it is possible to implement a feedback control over the motor M, or rather it is possible to adjust the motor M for changing at least an operative parameter of the load C and/or the installation wherein it operates.

For example if the motor is normally powered with a voltage of 24 Volts and the load C rotates at 500 r/min, during the shutdown time of the motor M the value of the detected voltage may be equal to about 20 Volts. The apparatus comprises a specific control unit CPU suitable to compare the value of the measured voltage with the "expected" voltage value (or reference value) under the same operating conditions. For instance the control unit CPU may have memorized the characteristic voltage/motor M rpm for the application taken into account.

In the specific application considered, i.e. in the case wherein the motor is coupled to an impeller of the type shown in figure 1, the characteristic supplied-voltage/rpm can be detected in a laboratory, for instance by carrying out a plurality of tests with the motor functioning as a generator operated by the impeller 2 at different speeds of rotation. The characteristic obtained in this way may be defined "at unpowered motor".

Alternatively the characteristic voltage/motor-rpm can be obtained with the powered motor operating the impeller 2 being immersed into water. The characteristic obtained in this way may be defined "at powered motor". During the motor M shutdown the impeller 2 decelerates and the voltage supplied by the motor decreases. Therefore, it is necessary to take into account the lowering of the voltage in order to detect the right angular velocity. For this reason the method makes use of a "corrected" characteristic, i.e. a characteristic which takes into account the reduction in the voltage caused by the motor M shutdown. The corrected characteristic can be determined by starting from the characteristic at powered motor and by means of suitable conversion factors or laboratory tests. In the cited example the corrected characteristic takes into account the 4 Volts voltage reduction which depends upon the rotor deceleration. Correction of the characteristic can be carried out during the step of calibrating the apparatus by means of laboratory tests.

On the grounds of the memorized characteristic the control unit CPU provides, as an output, a value of the speed of rotation of the rotor equal to 500 r/min, i.e. provides the corrected value corresponding to the speed of rotation when the motor is powered.

The skilled man will understand that shorter the time interval is during which the apparatus according to the present invention detects the voltage generated by the unpowered motor M, smaller the difference is between the values of the speed of rotation, as detected by the same apparatus, and the velocity of the shaft of the powered motor. In other words it is preferable that the apparatus according to the invention detects the voltage generated by the motor M immediately after the power supply has been cut off, in such a way to minimize the effects of the driving shaft deceleration. In fact the difference between the corrected characteristic and the characteristic "at powered motor" diminishes as the time interval for detecting the speed of rotation decreases to be negligible, with evident advantages for what concerns the measurement accuracy. For instance, for the application shown in figure 1, a proper value of the duration of the power shutdown is equal to about 1 (one) milliseconds.

In general the time interval for the shutdown varies depending upon the applications, i.e. depending upon the motor M and the load C "size". For many applications the time interval is comprised between 0.01 - 100 milliseconds.

The motor M shutdown time interval may also be referred to as a percentage of the total operating time. For example, in the field of the machines for dispensing beverages, the motors may be powered 90% of the operational time of the respective machine, and the power supply may be cut off for the remaining 10% of the operational time. In other words the apparatus according to the invention carries out the control over the speed of rotation of the motor M during 1/10 of the functioning time. For other applications the aforesaid percentage may be different. For instance, as the size of the motor M increases, i.e. as the powering voltage increases or when monitoring of the speed of rotation is critical, the shutdown time interval may be the 50% of the operating time of the motor.

During the motor M shutdown the supplied voltage may be measured once or rather several times. In this second case the measurements carried out are preferably processed by way of mathematical methods in order to reduce the deviations, as it will be described in detail.

The voltage signal sensed by the voltage measurement device V is input to the control unit CPU which provides for comparing it with a memorized reference signal. Preferably the voltage signal is converted into a digital signal, which can be processed easier, by means of an analog/digital converter A/D. The control unit, on the basis of the aforesaid comparison, determines the speed of rotation of the driving shaft and the load C. If the detected speed does not comply with the preset parameters for that particular application the control unit CPU modifies the operational parameters of the motor M accordingly. If the control unit CPU discovers that the impeller 2 rotates at a lower rpm than the expected one, for instance due to an increasing of the frictions caused by the build up of limestone within the bearings, the same CPU provides for reactivating the power of the motor M and for managing the functions by increasing the speed of rotation in such a way to compensate for the frictions and reestablish the preset speed of rotation. Thus the apparatus according to the invention configures as a valid means for controlling and adjusting the devices operated by electric motors and, in general, the installations and the machines provided with such devices.

The control and the adjustment are preferable carried out real time, i.e. during the functioning of the device C operated by the electric motor M, for instance continuously or at time intervals with the desired frequency. The apparatus according to the present invention configures also as a system for the diagnostics of electric motors and the devices to which they are coupled or the machines provided with such devices.

In the case wherein the motor M and the load C are coupled by means of gears, for instance adapters, the control unit CPU will have memorized the transmission/reduction factors in order to take into account the angular velocity of the load and not only the one of the motor M shaft.

The figure 3 shows another embodiment of the apparatus according to the present invention for controlling and adjusting an electric motor M coupled to a load C. In particular, the figure 3 is a simplified electric scheme of the apparatus. The means for temporarily cutting off the motor M power supply comprise a transistor T controlled by an oscillator O. At regular or irregular time intervals the oscillator O makes the transistor to open the motor M supply circuit, by impeding the current flow. The voltmeter V senses the voltage supplied by the motor M before the motor M power supply is reestablished.

The control unit CPU may have the further function of elaborating the measured voltage values by way of mathematical methods. For instance, if the apparatus provides for measuring the voltage value several time during the shutdown time, the control unit CPU may compute an average of the measured values, the root mean square deviations, etc.. In other words the control unit CPU may mathematically process the measured values of the voltage in order to minimize the possible error propagations, or for statistical reasons or also for the post-processing and the sending of data to external remote units.

The apparatus according to the invention allows for controlling and adjusting parts or devices operated by electric motors in a simple, rapid and effective way, with no need for using expensive sensors to be applied to the rotating shafts.

The apparatus and the method according to the present invention are thus extremely simple to implement and effective.

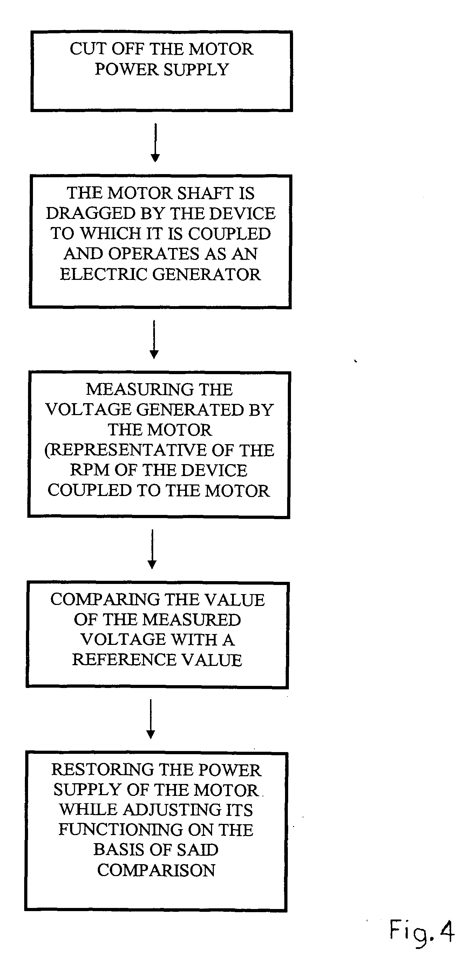

The figure 4 is a block diagram which shows in a schematic way the steps of the disclosed method. It is evident that the method can be applied into many technical fields, substantially in all cases wherein it is necessary to control and adjust the functioning of a device operated by an electric motor by detecting the speed of rotation of the same device.

Moreover it is evident that the production costs of the apparatus according to the present invention are the minimum, since it is not required to install sensors, encoders or other traditional devices utilized for detecting the angular velocities.

In general the apparatus and the method according to the present invention allow for carrying out an effective and quick feedback control over the functioning of the electric motor and the device coupled to the same. In fact, as it is shown in the figures 2 and 3, the control unit CPU can send a feedback signal R to the motor M in order to modify at least one operating parameter on the basis of the previously detected speed of rotation. For instance the control unit CPU may require an increasing of the output supplied by the motor M (or the supplied torque) in the event that the speed of rotation of the device coupled to it, i.e. the rpm of the load C, is lower than a given threshold value (comparison). Also, the control unit CPU can adjust the torque supplied by the motor, the operating and/or the shutdown time, etc., by means of the signal R.

Alternatively, or in cooperation with the signal R and the control signal of the means I, the control unit can send a feedback signal RG to the voltage generator G. This feedback control may be easier to implement with cheaper devices with respect to the control over the motor M. The signal RG can modify the voltage supplied to the motor M. For example, in order to decrease the rpm of the motor M supplied with 24 Volts, the control unit can send a signal RG to the generator G to reduce the supply voltage to 22 Volts.

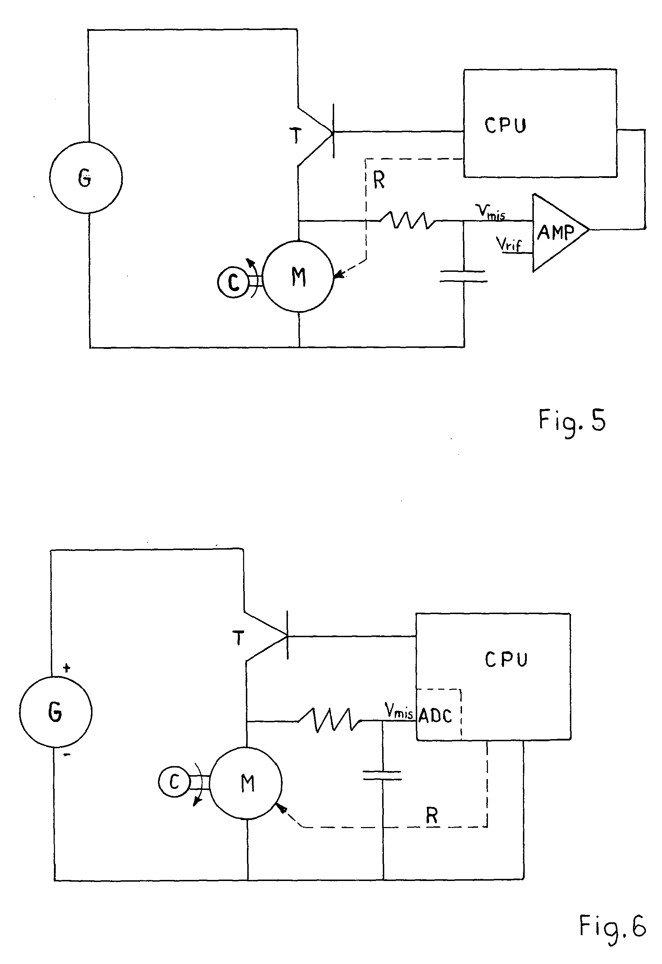

The figure 5 shows a third embodiment of the apparatus according to the present invention. The signal V_{MIS} of the voltage generated by the motor and the signal V_{RIF} of the reference voltage are input into an amplifier/comparator AMP. The difference between the values V_{MIS} and V_{RIF} is processed by the control unit CPU wherein the characteristic voltage/motor M rpm may be stored. On the basis of the aforesaid difference the control unit CPU sends a feedback signal R to adjust the powered motor M. Adjusting the motor M may affect its speed of rotation, the supplied torque, the power (output), etc.. The control unit CPU can be interfaced with other units of machines or installations wherein the motor M operates, so to allow for adjusting the machine or the installation.

The figure 6 shows a fourth embodiment of the apparatus according to the present invention wherein the control unit CPU incorporates an analog/digital converter ADC for converting the voltage signal V_{MIS} from analogical into digital.

The apparatus and the method according to the present invention can be utilized also for carrying out a regular diagnosis of the electric motor M functioning. In fact, when the motor M is not coupled to an external device C, it is possible to verify the inertia of its rotor. In other words the apparatus and the method of the invention allow for checking if the rotor of the motor M rotates correctly, independently upon the coupling with the external device C. For instance, the apparatus shown in the alleged figures can measure the speed of rotation of the motor M rotor at regular time intervals, in order to check if the related bearings operate properly and do not interfere with the rotation, for instance due to breaking of one or more guides of the same bearings, build up of external residues, seizings, etc.. In this respect the method and the apparatus of the invention configure as a useful auto-diagnosis means of the motor M. The diagnosis may also comprise detecting of the load C, i.e. the method and the apparatus may also be utilized to check if the load C is coupled to the motor M, for example at the start of the same motor.

For instance, by means of the method and the apparatus of the invention it is possible to check if the motor M is jammed, for example seized, or if it runs properly. In other words the method and the apparatus permit to implement a diagnostic control over the motor M operation. If the motor M is blocked, for instance due to jamming of the load C or due to a failure, the supplied voltage is steadily zero. Moreover, by means of the method and the apparatus of the invention it is possible to check if the motor M is coupled to the related load C or not. When the motor M is normally powered but is not coupled to the load C, the speed of rotation of the shaft of the unpowered motor is higher than the reference value and remains almost constant for a long time, since no resistance is applied to the same shaft by the load. The method and the apparatus may provide for sending an alarm signal to indicate jamming/failure of the motor M (or of the load C) or rather to indicate that the load C is not coupled to the motor M.

It will be clear for the skilled in the field that the motor M can operate a plurality of external devices. For instance the motor M may operate a hydraulic or pneumatic pump, an impeller of the type shown in figure 1, a screw conveyor for distributing a product, a pump for supplying an alimentary product within a circuit (for example a syrup or juice), a pump for circulating Freon gases (or the like) in a refrigerating circuit, a fan for extracting vapours or hot air from the environments or containers, etc..

In general the applications of the motor M and, thus of the apparatus and the device of the invention, are multiple in many technical fields. For instance the motor M can operate the helical shifters used within the automatic machines for distributing snacks or other ready-made foodstuffs. The motor M can operate a screw conveyor for ice in a machine for erogating beverages, such as soft drinks or the like, etc..

The method and the apparatus according to the present invention are particularly useful for controlling and adjusting the functioning of the devices operated by electric motors, for instance used within household appliances or within machines for dispensing coffee, when the motors and the related devices are not subject to scheduled maintenance.

The expert in the field will understand that the apparatus and the method according to the present invention can also provide for detecting the electric current intensity through the statoric windings of the motor M. In fact also this measure can provide useful information about the speed of rotation of the rotor, even if the current intensity depends upon the design of the motor, in particular depends upon its impedance and thus it would be more difficult to analyze (i.e. the post-processing of the current intensity measures would be more difficult than the post processing of the data related to the voltage).

## Claims

1. A method for controlling and adjusting a device operated by an electric motor **characterized by** comprising the steps of:
(a) cutting off the supply of electric power to said electric motor for at least a shutdown time;
(b) measuring the value of the voltage generated by said electric motor by virtue of the residual rotation of the rotor of the electric motor during at least a portion of said shutdown time.

2. The method according to claim 1, **characterized by** comprising the step of comparing the value of said measured voltage with a reference value.

3. The method according to claim 2, **characterized in that** said shutdown of the electric power supply takes place during the functioning of the motor, and further comprising the step of modifying at least one parameter related to the functioning of said device when necessary on the basis of said comparison.

4. The method according to claim 3, **characterized in that** the steps according to claims 1 to 3 are re-iterated for real time controlling and adjusting said device during its functioning.

5. The method according to any previous claims from 1 to 4, further comprising the step of detecting the angular velocity of said rotor and/or of the device coupled to said motor by processing the signal related to the value of said measured voltage.

6. The method according to any previous claims from 3 to 5, **characterized in that** said parameter related to the device functioning is chosen between the rpm, the torque, the power, the operating time, the stop time, and the like, or their combinations.

7. The method according to any previous claims from 1 to 6, **characterized in that** said shutdown time is included within 0.1 and 50 milliseconds.

8. The method according to any previous claims, **characterized in that** the total shutdown time is equal to about 1/10 of the total functioning time of the motor.

9. An apparatus for controlling and adjusting a device operated by an electric motor, **characterized by** comprising means for temporarily cutting off the electric power supply to said motor and a voltage measurement device for detecting the voltage generated by the motor, during the shutdown time of the electric power supply, by virtue of the rotor rotation.

10. The apparatus according to claim 9, further comprising a control unit suitable to compare the measured value of the voltage with a reference value and, on the basis of the eventual difference between said values, to send an adjustment signal to said electric motor in order to modify at lest one operating parameter.

11. The apparatus according to claim 9 or claim 10, **characterized in that** said means for temporarily cutting off the power supply comprise at least one transistor.

12. The apparatus according to any previous claim 9 to 11, **characterized by** comprising an analog/digital converter A/D for converting the detected voltage signal.

13. The apparatus according to any previous claim 9 to 12, **characterized in that** said control unit manages said means for cutting off the power supply and said voltage measurement device.

14. Use of the apparatus according to any previous claim from 9 to 13 for controlling and adjusting installations provided with an electric motor coupled to pumps, impellers, rotors, blades or like devices.

15. Use of the apparatus according to any previous claim from 9 to 13 for controlling and adjusting devices operated by electric motors in machines for preparing and/or dispensing beverages or foodstuffs.

16. A machine for preparing and/or dispensing beverages or foodstuffs, **characterized by** comprising the apparatus according to any claim from 9 to 13.
